# EUROPEAN PATENT SPECIFICATION

(11) **EP 0 288 934 B1**
(45) Date of publication and mention of the grant of the patent: **12.10.1994**
(21) Application number: 88106518.9
(22) Date of filing: 22.04.1988
(51) Int. Cl.: G09G 1/16

(54) **Microcomputer having function of generating data signals used for displaying characters**
Mikrocomputer mit der Funktion zum Generieren von Datensignalen, verwendet für die Anzeige von Zeichen
Micro-ordinateur ayant la fonction de génération de signaux de données utilisés pour l'affichage de caractères

(30) Priority: 22.04.1987 JP 100502/87
(43) Date of publication of application: 02.11.1988
(73) Proprietor: NEC CORPORATION, Tokyo (JP)
(72) Inventor: Suzuki, Hiroyuki, Minato-ku Tokyo (JP)
(74) Representative: Glawe, Delfs, Moll & Partner

(56) References cited:
- ELECTRONICS, June 28, 1984, by Mc Graw-Hill KISNER& LADD "A new-generation video processor boosts resolution"
- W.Rudolf, "Zeichengeneratoren für Fernsehsysteme", 1983, R.Oldenbourg Verlag GmbH, München, pages 21-26
- Tietze/Schenk, "Halbleiter-Schaltungstechnik", 8th edition, 1986, Springer-Verlag, page, 289

## Description

### BACKGROUND OF THE INVENTION

The present invention relates to a microcomputer which controls an apparatus equipped with a raster scan type cathode ray tube (hereinafter simply called "CRT"), and more particularly to a one-chip microcomputer generating data signals to be used for displaying numerals, letters, symbols, etc. (hereafter called collectively "characters") on the CRT.

A microcomputer, when employed to control a television receiver, has a variety of functions such as a digital tuning function of receiving a selected broadcasting station wave by means of PLL (Phase Locked Loop) frequency synthesizer technique or voltage synthesizer technique, a volume control function of increasing or decreasing a sound volume and a timer function of setting a time point at which a power switch of the television receiver is turned ON or OFF. For television receivers which display characters such as a selected channel number on the CRT along with video pictures, the microcomputer has a function of generating data signals of characters to be displayed. For that purpose, the microcomputer is provided with a character memory which stores data of each character to be displayed and a video memory which stores address information of the characters in the character memory to make access to the character data to be displayed. In order to display the characters at a desired position on the display screen of the CRT, timing of reading the character data out of the character memory should be in synchronism with vertical and horizontal synchronizing pulses which are used for displaying video pictures. On the other hand, the operation of the microcomputer is under control of a timing signal. Each function is carried out by executing instructions stored in a program memory, and the execution timing and time period of the program is determined by a machine cycle of the microcomputer. Accordingly, the reading timing of the character data which is under control of the execution timing of the program becomes asynchronous with the vertical and horizontal synchronizing pulses of the TV.

From "Zeichengeneratoren für Fernsehsysteme, Rudolf, Oldenbourg, 1983, pages 21-26" a microcomputer is known which has a function of transferring character data to be displayed by a display apparatus. However, this microcomputer is characterized only in that a data memory has a VRAM area for storing character information. Such character information is read out of the memory and supplied to a generator. In the generator the character information supplied from the memory is temporarily stored in a buffer memory and then supplied to a generator in which character data to be displayed are generated. The character data thus generated are transferred to the display apparatus to a parallel-serial converter and a video circuit. Thus the generation of the character data and the transfer of the same to the display apparatus are performed by the generator itself.

### SUMMARY OF THE INVENTION

Therefore, an object of the present invention is to provide a microcomputer which can read the character data in synchronism with a timing signal different from the program-execution timing.

Another object of the present invention is to provide a microcomputer in which the same read only memory is employed as both of program memory and character memory.

Still another object of the present invention is to provide a microcomputer suitable for a television receiver in which characters are superimposed on video pictures on a display screen.

The microcomputer according to the present invention is characterized by the features of the claim 1.

Further features and advantages are described in the sub-claims.

The character data output command signal is generated in synchronism with vertical and horizontal synchronizing pulses. Before this command signal is generated, a plurality of character data to be displayed and read out of the second area of the memory and stored in the storage means. In other words, the fourth means and storage means operate to prefetch the character data to be displayed. Therefore, even when the character data output command signal is produced simultaneously with the access timing to the first area, the necessary character data which has already been stored in the storage means can be outputted. The instructions are cyclically read out of the first area during the character data output period. Thus, the microcomputer can execute the instructions in parallel to outputting the character data.

### BRIEF DESCRIPTION OF THE DRAWINGS

The above and other objects, advantages and features of the present invention will be more apparent from the following description taken in conjunction with the accompanying drawings, in which
Fig. 1 is a block diagram representative of an embodiment of the present invention;
Fig. 2 is a data map representative of a part of a character area shown in Fig. 1;
Fig. 3 is a program flow chart of a microcomputer shown in Fig. 1;
Fig. 4 is a block diagram representative of a display clock generator shown in Fig. 1;
Fig. 5 is a timing chart representative of an operation of the display clock generator shown in Fig. 4;
Fig. 6 is a block diagram representative of a system clock generator shown in Fig. 1;
Fig. 7 is a timing chart representative of an operation of the system clock generator shown in Fig. 6;
Fig. 8 is a timing chart representative of one example of a character display operation in Fig. 1; and
Fig. 9 is a timing chart representative of another example of a character display operation in Fig. 1.

### DETAILED DESCRIPTION OF THE EMBODIMENT

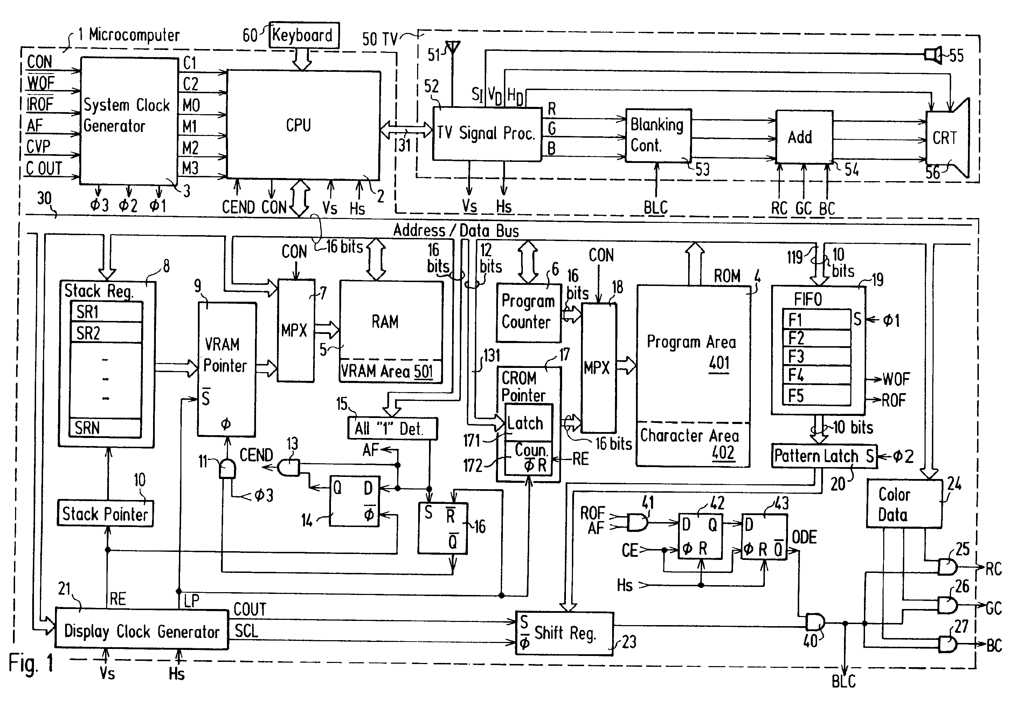

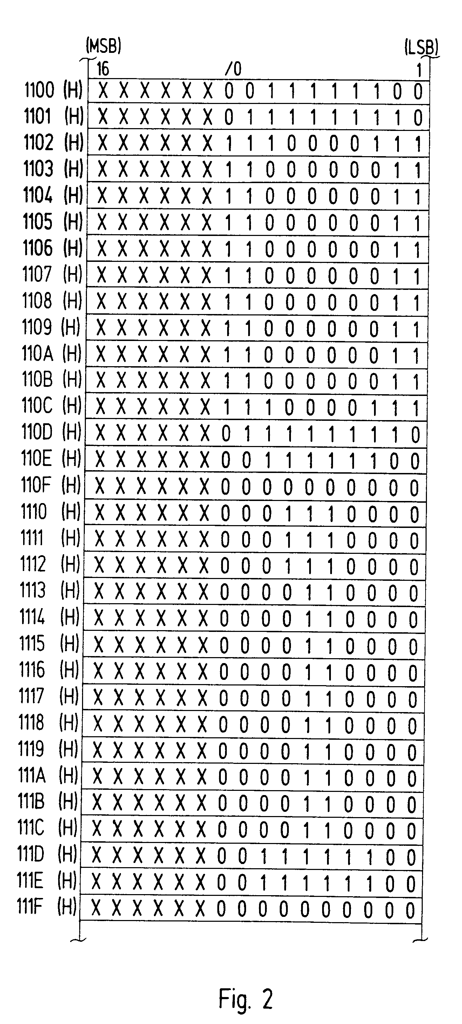

Referring to Fig. 1, a microcomputer l according to an embodiment of the present invention is employed for a digital control of a television receiver (TV) 50 and coupled between the TV 50 and a keyboard 60. The microcomputer l includes a central processing unit (CPU) 2, a read only memory (ROM) 4 and a random access memory/(RAM) 5, which are interconnected via an internal address/data bus 30. The ROM 4 includes a first memory area represented as "program area 401" storing instructions of a program to be executed by the CPU 2 and further includes, in accordance with the present invention, a second memory area represented as "character area 402" strong data of characters which can be displayed on a display screen of a CRT 56 in the TV 50. In this embodiment, each character has a size of ten picture elements in a horizontal direction by sixteen picture elements in a vertical direction on the CRT 56. One picture element of the CRT 56 corresponds to one bit of the ROM 4. For example, as shown in Fig. 2, the character data of "0" are stored in the character area (402) from "1100(H)" address to "110F (H)" address, and the character data of "1" are stored in the area from "1110(H)" to "111F (H)" address. The mark "(H)" denotes hexadecimal representation. Other numerals, letters and symbols are also stored in the character area 402. The character data per one horizontal scan line of each character are stored from the first bit (least significant bit, i.e., LSB) to the tenth bit of one address. Since the data from the eleventh bit to the sixteenth bit (MSB) are not employed, the data stored therein may take "0" or "1" and therefore they are represented by a mark "X". The bits taking "1" from LSB to tenth bit form the character to be displayed on the CRT 56.

Turning back to Fig. 1, the access to the ROM 4 is carried out by a program counter 6 or a CROM pointer 17 under the control of a multiplexer (MPX) 18. When a character-display-command is not produced, a character display command signal CON, which will be described later, takes a low level, so that the MPX 18 selects the output of the program counter 6 and transfers it to the program area 401 of the ROM 4 to read an instruction at the address designated by the output of the program counter. The read out instruction is sent to the CPU 2 via the bus 30. The CPU 2 receives two system clock signals C₁ and C₂ and four machine cycle signals M0 to M3 from a system clock generator 3 and executes one instruction read out of the ROM 4 with four machine cycles M0 to M3. The generator 3 will be described later in detail. When the signal CON is in the low level, a multiplexer (MPX) 7 couples the address input of the RAM 5 to the bus 30, so that the CPU 2 makes access to the RAM 5 to write data thereinto or read data therefrom. The keyboard 60 includes channel selection keys for designating a desired channel number, volume control keys, timer setting keys, etc.

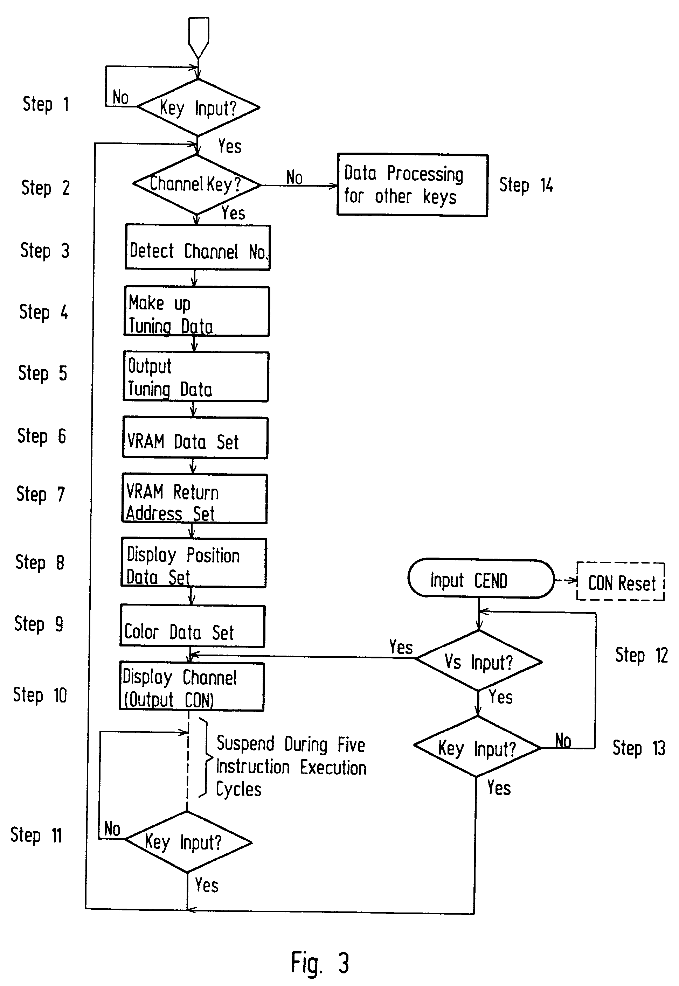

When the channel selection keys on the keyboard 60 are operated, the microcomputer l tunes the TV 50 so as to select a broadcasting station of the designated channel number and outputs character data signals for displaying the designated channel number on a desired position of the CRT 56. The program flow chart for this operation is shown in Fig. 3. In step 1, it is detected whether or not the key of the keyboard 60 is operated. When the key is operated, it is detected which key has been operated (Step 2). Since the channel selection key is operated, the designated channel number is detected (Step 3). In case where the volumn control key or the timer setting key is operated, the data processing operation responsive to the operated key is executed (Step 14). Assuming that the channel number "10" is designated, the tuning data for timing the TV 50 to the broadcasting station of the channel number "10" are made up (Step 4) and then outputted to the TV 50 via an external data bus 31 (Step 5).

In the TV 50, a television signal processing circuit 52 selects the station of the channel number "10" receive by an antenna 51 in response to the tuning data supplied thereto and detects the broadcasting wave signal. The circuit 52 further separates the detected signal into 9 sound information signal and a video information signal. The sound information signal is subjected to a sound detection to produce a sound signal S_{I} which is in turn supplied to a loudspeaker 55. On the other hand, a vertical synchronizing pulse Vs and a horizontal synchronizing pulse Hs are picked out of the video information signal to produce vertical and horizontal diflection signals V_{R} and H_{R} which are in turn supplied to the CRT 56. Moreover, three primary color signals R, G and B are generated from the video information signal and supplied to the CRT 56 via a blanking control circuit 53 and an adder circuit 54. Thus, the video pictures and sound transferred from the station of the channel number "10" are reproduced.

In order to display the selected channel number "10" on the CRT 50, the microcomputer l executes successively the following operations shown in Fig. 3 during the turning operation of the TV 50. At first, the microcomputer l sets the starting address of the characters to be displayed, which are stored in the character area 402 of the ROM 4, at the RAM 5 (Step 6: VRAM Data Set). The RAM 5, which is employed by the CPU 2 as a data memory during the instruction execution, includes a VRAM area 501 in accordance with the present invention and the starting address of the characters are written into the VRAM area 501. Here, the leading address of the VRAM area 501 in the RAM 5 is designated to be "5000(H)". Since the characters to be displayed are "10(ten)", the starting address data "1110(H)" for the character "1(one" is written to the "5000(H)" address location of the RAM 5 and the starting address data "1110(H)" for the character "0(zero)" into the "5001(H)" address location of the RAM 5. Moreover, the CPU 2 writes row end data, "FFFF(H)" for example, into the "5002(H)" address location of the RAM 5. The row end data represents the end of the character display per one row. In case where only the characters "10" are displayed within one picture, the data "FFFF(H)" is further written into the "5003(H)" address of the RAM 5. This is, the fact that the data "FFFF(H)" is written twice without a break represents the end of the character display per one picture. Thereafter, the CPU 2 writes return address data of the VRAM area into a stack register 8 (Step 7). In this embodiment, the first register SR1 of the stack register 8 stores the leading address data "5000(H)" of the VRAM area 501 and the second register SR2 stores the data "5003(H)". If a plurality of characters are displayed in a plurality of rows, a plurality of address data of the VRAM area 501 at which the starting address data of the starting character in the respective rows are stored are written into the stack register 8. Further, the address data of the VRAM area 501 at which the display end data "FFFF" is stored is also written into the stack register 8. It is required to set a display location of the characters on the CRT 56. For this purpose, the CPU 2 supplies display location information to a display clock generator 21 (Step 8 in Fig. 3). The display location information comprises a CRT display vertical location data, a CRT display horizontal location data, a character display vertical location data and a character display horizontal location data. The CRT display vertical and horizontal location data correspond respectively to the number of horizontal scan lines and the number of picture elements which denote a starting point of a video picture actually displayed by the CRT 56 against the video picture per one screen transferred from the broadcasting station. The character display vertical and horizontal location data designate respectively the vertical and horizontal starting points of the characters to be displayed on the CRT 56.

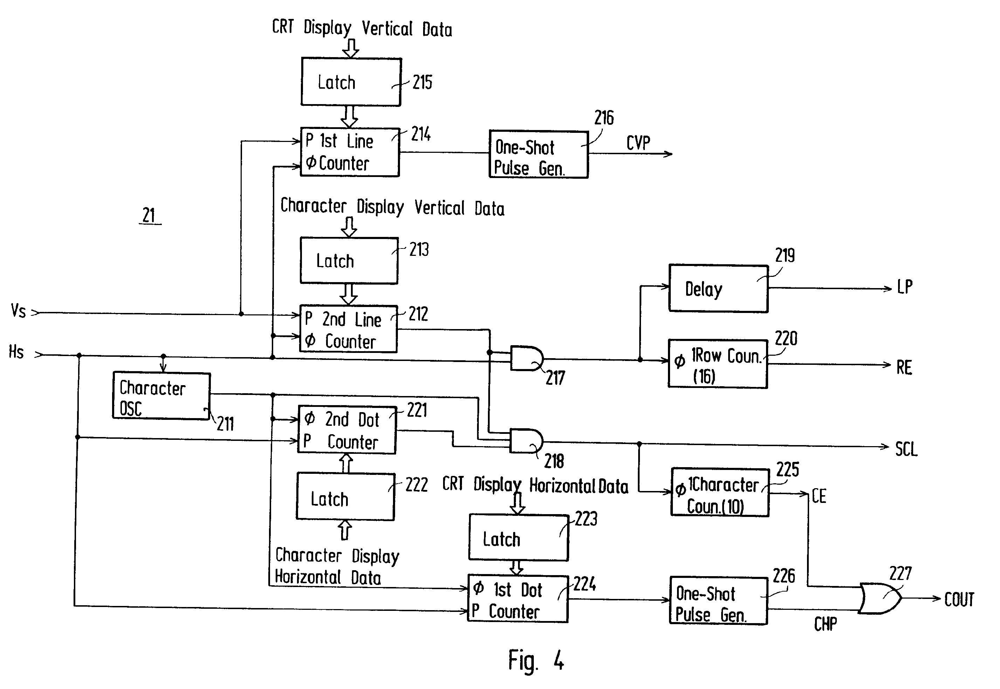

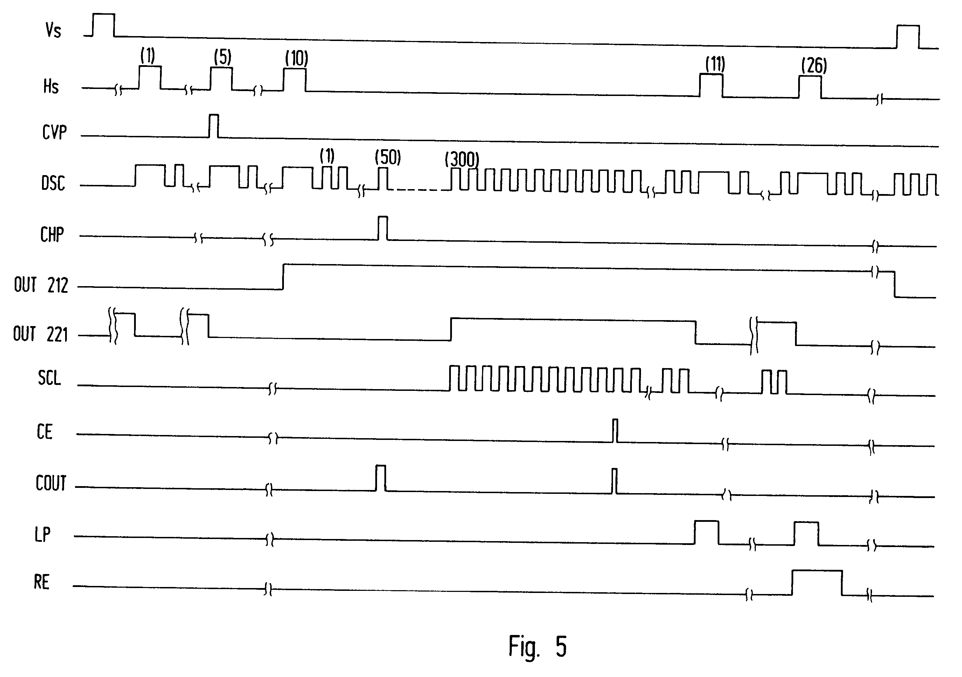

Referring to Fig. 4, the display clock generator 21 includes four latch circuits 215, 223, 213 and 222 storing the CRT display vertical location data, the CRT display horizontal location data, the character display vertical location data and the character display horizontal location data supplied thereto, respectively. Assuming that the starting point of the video picture actually displayed by the CRT 56 corresponds to the fifth horizontal scan line in the vertical direction and the fiftieth picture element in the horizontal direction and the starting point of the displayed characters corresponds to the tenth horizontal scan line in the vertical direction and the three-hundredth picture element in the horizontal direction, the latch circuits 215, 223, 213 and 222 are supplied with the data of "4", "49", "9" and "299", respectively. A character oscillator 211 is of a well-known synchronizing type, and therefore the output thereof is held at the high level during the high level period of the horizontal synchronizing pulse Hs and clock pulses are generating after a predetermined time passes from the falling edge of the pulse Hs, as shown in Fig. 5. One clock pulse from the oscillator 211 corresponds to one picture element of the CRT 56. The output of the oscillator 211 is supplied to the clock terminals φ of the first and second dot counters 224 and 221, and the horizontal synchronizing pulse Hs is supplied to the clock terminal φ of first and second line counters 214 and 212. The counters 221 and 224 receive the data of the latch circuits 222 and 223 in synchronism with the horizontal synchronizing pulse Hs and the counters 212 and 214 receive the data of the latch circuits 213 and 215 in synchronism with the vertical synchronizing pulse Vs, respectively. Therefore, the output of the first line counter 214 changes to the high level by five horizontal synchronizing pulses Hs and returns to the low level in response to the vertical synchronizing pulse Vs, as shown in Fig. 5. In synchronism with the leading edge of the output of the counter 214, a pulse generator 216 generates a one-shot pulse CVP. The second line counter 212 produces the high level output by receiving ten horizontal synchronizing pulses Hs and its output changes to the low level by the vertical horizontal pulse Vs. The first dot counter 224 produces the high level output in response to the fiftieth pulse from the oscillator 211 and its output is changed to the low level in response to the horizontal synchronizing pulse Hs. A pulse generator 226 generates a one-shot pulse CHP in synchronism with the leading edge of the output of the counter 224. The second dot counter 221 changes the output to the high level by receiving three-hundred pulses from the oscillator 221 and its output returns to the low level in response to the horizontal synchronizing pulse Hs. The output of the second line counter 212 and the horizontal synchronizing pulse Hs are supplied to a two-input AND gate 217. The output of the second line counter 212, the clock pulses from the oscillator 211 and the output of the second dot counter 221 are supplied to a three-input AND gate 218. The output of the AND gate 217 is delayed by a delay circuit 219 by one horizontal period and then led out as a line pulse LP. The output of the AND gate 217 is further supplied to a one row counter 220. Since the size of one character in the vertical direction corresponds to sixteen picture elements (i.e., sixteen horizontal scan lines), the counter 220 is preset with the data of "16". That is, the counter 220 produces a one row display end pulse RE representative of the end of the character display per one row in synchronism with the leading edge of the seventeenth pulse from the AND gate 217. The output of the AND gate 218 is led out as a shift clock pulse SCL and supplied to a one-character counter 225. Since the size of one character in the horizontal direction corresponds to ten picture elements, the counter 225 is preset with the data of "10". Accordingly, the counter 225 produces a character end pulse CE representative of the end of the data display per one horizontal scan line of one character in synchronism with the leading edge of the eleventh pulse from the AND gate 218. The pulses CHP and CE are supplied to an OR gate 227 whose output is in turn led out as a character data output command signal COUT. Thus, the display clock generator 21 generates pulse signals CVP, CHP, RE, LP, CE and SCL required for a character display in synchronism with the vertical and horizontal synchronizing pulses Vs and Hs, as shown in Fig. 5.

Turning again back to Figs. 1 and 3, the selection of the characters to be displayed and the setting of the data of the display starting position are now completed (Steps 6 to 8) and then the CPU 2 designates a color of the characters to be displayed (Step 9). To this end, the CPU 2 writes three-bit color data into a color data latch circuit 24 (Fig. 1). When the color of the character to be displayed is white, the color data takes a value of "111". The color data of "010" is written into the latch circuit 24, when green color characters are displayed. The program counter 6 designates the address of the program area 401 where an instruction representative of a character display command is stored, and the CPU 2 executes the instruction of this command. As a result, the character display command signal CON changes to the high level (Step 10). In response to the high level signal CON, the MPX 7 disconnects the address input of the RAM 5 from the bus 30 and connects it to a VRAM pointer 9 and the MPX 18 for the ROM 4 selects the CROM pointer 17 and transfers its output to the address input of the ROM 4. Therefore, the access to the ROM 4 by the program counter 6 is inhibited and the access to the RAM 5 by the address data on the bus 30 is inhibited. Namely, the CPU 2 suspends the program execution. However, the key input from the keyboard 60 has to be accepted even when the program execution is suspended. Accordingly, the high level of the character display command signal CON is not maintained long but is returned cyclically to the low level to allow the program counter 6 to make access to the ROM 4. In this embodiment, the high level period of the character display command signal CON is designated to be five times of one-instruction execution cycle period of the CPU 2, and the low level period thereof is designated to be one-instruction executed cycle period. As shown by a Step 11 in Fig. 3, therefore, the program counter 6 makes access to the ROM 4 and the CPU 2 executes a judge instruction to detect whether a key input is present every time period corresponding to five instruction execution cycles.

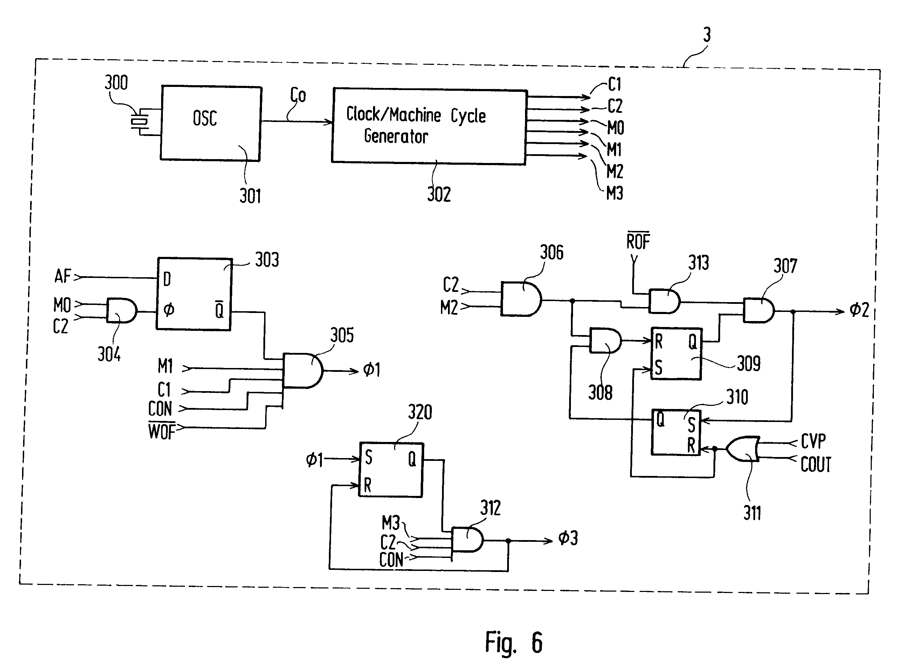

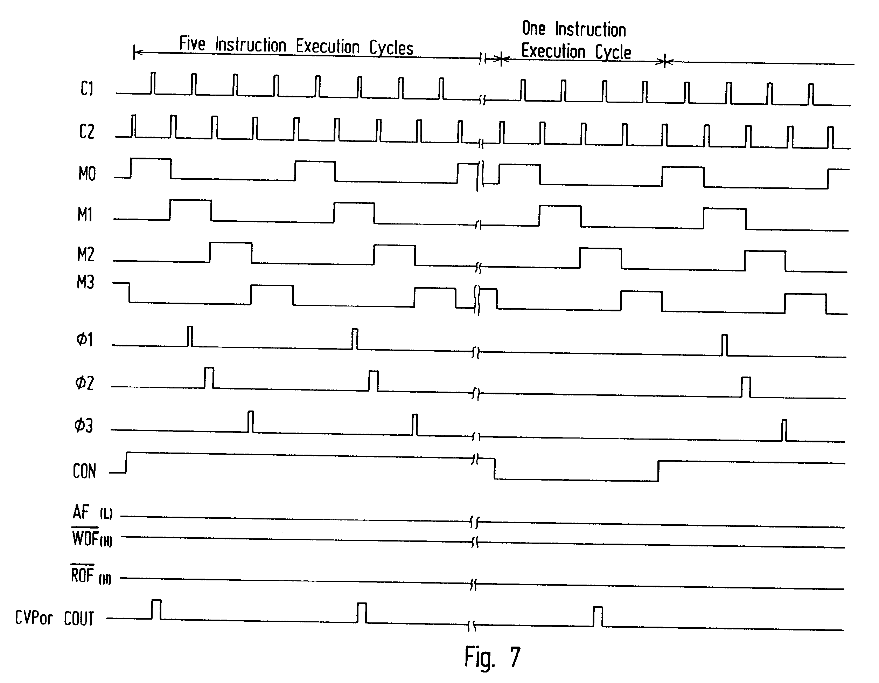

The character display command signal CON returning cyclically to the low level can be generated by employing the machine cycle signals M0 to M3 from the system clock generator 3. Referring to Fig. 6, the clock generator 3 includes an oscillator 301 which cooperates with a crystal resonator 300 to generate an oscillation signal Co of a predetermined frequency. A system clock/machine cycle generator 302 responds to this oscillation signal Co to generate the system clocks C₁ and C₂ and the machine cycle signals M0 to M3 as shown in Fig. 7. The CPU 2 executes one instruction in four machine cycles M0 to M3. Accordingly, the character display command signal CON can be generated by a counter (not shown) responsive to the machine cycle signals M0 to M3. The clock generator 3 further generates a first latch clock φ₁ supplied to a first-in first-out memory (FlF0 memory) 19 (Fig. 1), a second latch clock φ₂ supplied to a pattern latch circuit 20 and an increment clock φ₃ supplied to the VRAM pointer 9. The latch clock φ₁ is generated by a D-type flip-flop (D-F/F) 303, at two-input AND gate 304 and a five-input AND gate 305 which are connected and supplied with control signals as shown. Among these control signals, a signal W̅O̅F̅ is an inverted signal of a signal WOF generated by the FlF0 memory 19 which has five memory areas F₁, F₂, F₃, F₄ and F₅. The signal WOF takes the high level when all the five areas F₁ - F₅ of the FlF0 memory 19 store data. A signal AF takes the high level when a data detector 15 (Fig. 1) detects that all the bits of the data transformed from the bus 30 are "1". Accordingly, when the signals CON, W̅O̅F̅ and AF take the high level, high level and low level, respectively, the latch clock φ₁ is generated in synchronism with the system clock C1 during the second machine cycle M1, as shown in Fig. 7. The second latch clock φ₂ is generated by four AND gates 306, 307, 308 and 313, two S-R type flip-flop (SR-F/F) 309 and 310 and one OR gate 311 which are connected as shown in Fig. 6. The OR gate 311 is supplied with the pulses CVP and COUT described with reference to Figs. 4 and 5. A signal R̅O̅F̅ is an inverted signal of a signal ROF generated by the FlF0 memory 19, the signal ROF taking the high level when all the data stored in the FlF0 memory 19 are read out. Accordingly, the pulse CVP or COUT is supplied in the state of the high level signal R̅O̅F̅, the latch clock φ₂ is generated in synchronism with the system clock C₂ during the third machine cycle M2, as shown in Fig. 7. The clock φ₂ is not generated unless the pulse CVP or COUT is supplied again. When the signal R̅O̅F̅ changes to the low level, the latch clock φ₂ is not generated. The increment clock φ₃ is generated by a three-input AND gate 312 and an SR-F/F 320 in synchronism with the system clock C₁ during the fourth machine cycle M3 after the generation of the first latch clock φ₁.

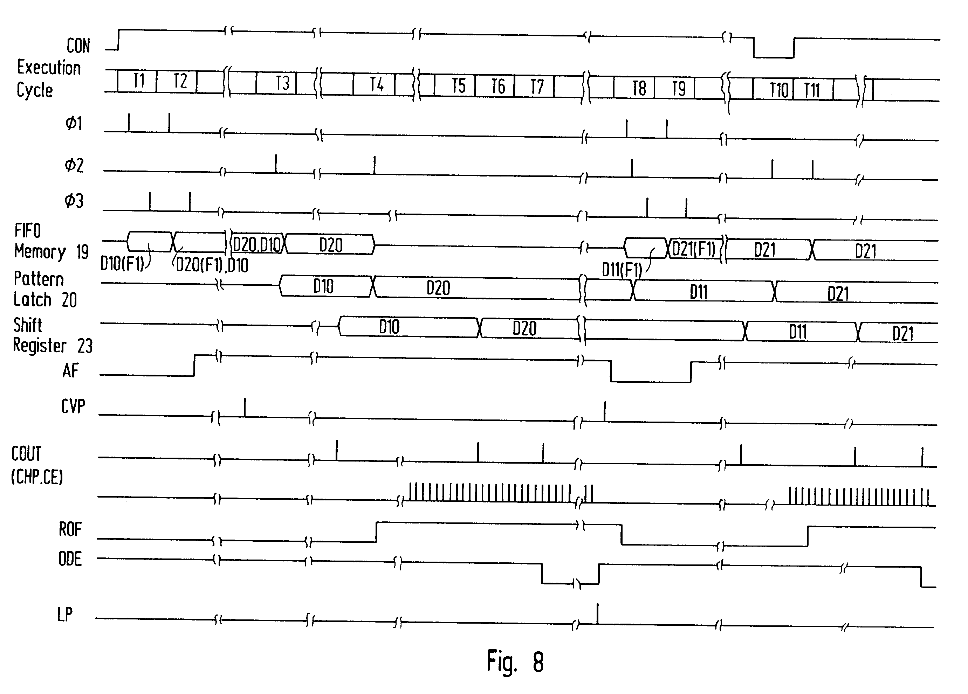

Next, a character display operation will be described with reference to Figs. 1, 3 and 8. When the character display command signal CON takes the high level, the MPX 7 selects the VRAM pointer 9 which is preset with the starting address data "5000(H)" of the VRAM area 501. Accordingly, the 16-bit data "1110(H)" stored in the starting address "5000(H)" of the VRAM area 501 is read therefrom to the 16-bit bus 30. The CROM pointer 17 includes a 12-bit data latch 171 receiving a 12-bit data from a 12-bit branch bus 131 and a 4-bit counter 172 and outputs a 16-bit address data. As shown in Fig. 2, the data of each one of the characters are stored in successive sixteen address locations of the character area 402 in the ROM 4, and the more significant twelve bits among 16-bit addresses designating these sixteen address locations are equal to one another. On the other hand, the remaining less significant four bits are different from one another and increment one by one from the value of the starting address location. The character data per one address location is displayed during one horizontal scan line period. Therefore, the more significant twelve bits among the 16-bit starting address data read out of the RAM 5, i.e. "111 (H)", are transferred to the 12-bit branch bus 131 and latched in the 12-bit latch 171 of the CROM pointer 17. The content of the 4-bit counter 172 of the CROM pointer 17 is initialized to have a 4-bit data "0000" and increment by one every one horizontal scan line, i.e. every application of the line pulse LP thereto from the display clock generator 21. The CROM pointer 17 outputs the 16-bit address data "1110(H)" by combining the content of the 12 bit latch 171 as the more significantly 12-bit with the content of the 4-bit counter 172 as the less significant 4-bit and sends it to the address input of the ROM 4 via the MPX 18. Thus, in synchronism with the clock C1 during the second machine cycle M1 in an execution cycle T₁ shown in Fig. 8, the 16-bit data stored in the "1110(H)" starting address location of the ROM 4, "XXXX XX00 0111 000", is read out of its character area 401 to the 16-bit bus 30. The first latch clock φ₁ is generated simultaneously. As a result, the less significantly ten bits data D₁₀ among the read-out data, i.e., "00 0111 0000", is written via the 10-bit branch line 119 into a first memory area F1 of the FlF0 memory 19, as shown in Fig. 8. Since the signal CON takes the high level during a period corresponding to five instruction execution cycles, the FlF0 memory 19 includes five areas F₁ to F₅. Since the tuning operation of the TV50 is not completed, the pulses CVP and COUT are not generated, so that the second latch clock φ₂ is not generated. Thus, the data per one horizontal scan line of the character "1" is prefetched into the FlF0 memory 19 during the cycle T1. The increment clock φ₃ is generated in synchronism with the clock C₂ during the fourth machine cycle M3 in the cycle T1 and then supplied to the clock terminal φ of the VRAM pointer 9 via an AND gate 11. The data of the pointer 9 is thereby changed to "5001(H)", so that the 16-bit data "1100(H)" stored at the "5001(H)" address location of the RAM 5 is outputted to the 16-bit bus 30. The more significant twelve bits among the read out 16-bit data "1100(H)", i.e. "110 (H)", are transferred to the 12-bit branch bus 131 and stored into the latch 171 of the CROM pointer 17. The content of the counter part 172 is still "0 (H)". Accordingly, the data "XXXX XX00 1111 1100" at the starting address "1100(H)" of the ROM 4 is outputted to the bus 30 in synchronism with the clock C₁ during the second machine cycle M₁ in an execution cycle T₂ shown in Fig. 8, and the less significant ten bits data D₂₀, "00 1111 1100", is stored into the second memory area F2 of the FlF0 memory 19. The increment clock φ₃ changes the data of the VRAM pointer 9 to "5002(H)", so that the data of "FFFF(H)" is read out of the RAM 5. The all "1" detector 15 detects it and produces the high level signal AF as shown in Fig. 8 to set an SR-F/F 16. Therefore, the latch clock φ₁ to the FlF0 memory 19 is not generated to prevent the FlF0 memory 19 from storing undesired data. Since the AND gate 11 is closed by the Q̅ output (logic 0) of the SR-F/F 16, the increment clock φ₃ is not supplied to the VRAM pointer 9. Namely, the output data of the pointer 9 does not change. Thus, the first character data per one horizontal scan line for the characters "10 (ten)" are prefetched into the FlF0 memory 19.

When the TV 50 is tuned to the channel number "10", the vertical and horizontal synchronizing pulses Vs and Hs are supplied to the display clock generator 21 to activate it. As discussed hereinbefore, the pulse CVP is generated at first, so that the second latch clock φ₂ is generated in synchronism with the clock C₂ during the third machine cycle M2 in an execution cycle T3 shown in Fig. 8. In response to the latch clock φ₂, the pattern latch circuit 20 latches the data D₁₀ stored in the first area F1 of the FlF0 memory 19. When the character oscillator 211 (Fig. 3) generates fifth pulses, the pulse CHP, i.e. the character data output command pulse COUT, is generated, so that a shift register 23 receives the data D₁₀ of the pattern latch 20 in synchronism with the leading edge of the pulse COUT, as shown in Fig. 8. Since the pulse COUT is generated, the second latch clock φ₂ is generated again is synchronism with the clock C₂ during the third machine cycle M2 in an execution cycle T₄. The data D₂₀ stored in the second area F2 of the FlF0 memory 19 is thereby latched into the pattern latch circuit 20. The FlF0 memory 19 produces the high level signal ROF, and therefore the clock φ₂ is not generated until new character data is written into the FlF0 memory 19.

When ten horizontal synchronizing pulses Hs are supplied and the OSC 211 produces three-hundred pulses, the shift clock pulses SCL are generated as shown in Fig. 8. Thus, the data D₁₀ of the shift register 23 is outputted one bit by one bit in synchronism with the falling edge of each shift clock pulse SCL. Since an AND gate 40 is open, the output of the shift register 23 is supplied as a blanking control signal BLC to the blanking control circuit 53 in the TV 50. During the high level period of the signal BLC, the control circuit 53 changes its output to the low level irrespective of the primary color signals R, G and B. The output of the AND gate 40 is further supplied to the respective first input nodes of AND gates 25, 26 and 27 whose second input notes are supplied with data signals from the color data circuit 24. The outputs of the AND gates 25, 26 and 27 are supplied as character color signals RC, RG and RB to the adder circuit 54 in the TV 50 wherein the character color signals RC, RG and RB are added to the outputs of the blanking control circuit 53 and then supplied to the CRT 56. When all the signals RC, RG and RB take logic 1, a white color is displayed on the CRT 56. When only the signal RG takes logic 1, a green color is displayed on the CRT 56.

By the generation of ten shift clock pulses SCL, all the bits data of the shift register 23 are outputted. This is, the first character data D₁₀ per one horizontal scan line of the character "1" is outputted. Since the character end pulse CE is generated by the eleventh shift clock pulse SCL, the data D₂₀ of the pattern latch 20 is transferred into the shift register 23 and then outputted one bit by one bit in synchronism with the falling edge of each shift clock pulse SCL. As a result, the first character data D₂₀ per one horizontal scan line of the character "0" is outputted. When the data output is completed, the character end pulse CE is generated again in an execution cycle T₇ shown in Fig. 8. Since the signals ROF and AF are in the high level, an AND gate 41 and two D-F/Fs 42 and 43 changes an output control signal ODE to the low level in response to the second generation of the character end pulse CE. The AND gate 40 is thereby closed and the CRT 56 reproduces the video picture from the broadcasting station.

Simultaneously with the arrival of the horizontal synchronizing pulse Hs, the line pulse LP is generated as shown in Fig. 8. The content of the counter part 172 of the CROM pointer 17 is incremented by one to change a value of "1(H)" in synchronism with the falling edge of the line pulse LP. The SR-F/F is reset. Since a stack pointer 10 designates the first register SR1 of the stack register 8, the data of "5000(H)" is set into the VRAM pointer 9 in response to the falling edge of the line pulse LP. The 16-bit data of "1110(H)" is thereby read out of the RAM 5, and the more significant twelve bits among the read out 16-bit data, i.e. "111 (H)", are stored in the latch 171 of the CROM pointer 17. The content of the counter part 172 is "1 (H)". Therefore, the address data "1111(H)" is supplied from the CROM pointer 17 to the ROM 4. The signal AF changes to the low level. The data of "XXXX XX00 0111 0000" is thereby read from the ROM 4 and the less significant ten bits data D₁₁ thereof, i.e. "00 0111 0000", is written into the first area F1 of the FlF0 memory 19 in response to the latch clock φ₁ in an execution cycle T₈. The FlF0 memory 19 changes the signal ROF to the low level. Since the SR-F/F 309 is in the set state, the latch clock φ₂ is generated in the cycle T₈, so that the data D₁₁ of the area F1 of the FlF0 memory 19 is latched into the pattern latch circuit 20. The increment clock φ₃ changes the content of the VRAM pointer 9 by one to make access to the "5001(H)" address location of the RAM 5 at which the data of "1100(H)" is stored. As a result, the data of the "1101(H)" address location of the ROM 4, i.e. "XXXX XX01 1111 1110", is read therefrom. The less significant ten bits data D₂₁ of the read-out data, "01 1111 1110", is written into the first area F1 of the FlF0 memory 19 in response to the latch clock φ₁ in an execution cycle T₉. Since the SR-F/F 309 (Fig. 6) is reset and since the pulse CVP or COUT is not arrived, the latch clock φ₂ is not generated in the cycle T₉. The data of the VRAM pointer 9 is changed to "5002(H)" by the increment clock φ₃, so that the data of "FFFF(H)" is outputted from the RAM 5. Thus, the character data D₁₁ and D₂₁ in the second line of the characters "10 (ten)" are prefetched in the latch circuit 20 and the FlF0 memory 19, respectively, before the pulse CHP is generated. When the pulse CHP is thereafter generated to produce the character data output command pulse COUT, as shown in Fig. 8, the shift register 23 receives the data D₁₁ of the pattern latch circuit 20. The latch clock φ₂ appears in an execution cycle T₁₀, so that the data D₂₁ stored in the area Fl of the FlF0 memory 19 is latched by the pattern latch circuit 20. The FlF0 memory 19 changes the signal ROF to the high level. The data D₁₁ of the shift register 23 is outputted one bit by one bit in response to each shift clock pulse SCL from the generator 21. The AND gate 40 is in the open state, since the D-F/Fs 42 and 43 are reset by the horizontal synchronizing pulse Hs. Accordingly, the high level output of the shift register 23 changes the primary color signals R, G and B to the low level, and the character color signals CR, CG and CB are superimposed on the video picture. When the second line character data D₁₁ for the character "1 (one)" is outputted, the character end pulse CE is generated. The second line data D₂₁ of the character "0 (zero)" is thereby transferred into the shift register 23 and then outputted one bit by one bit. When the pulse CE is generated again, the gate 50 is closed.

The above operation is repeated until the seventeenth horizontal synchronizing pulse Hs arrives, so that the selected channel number "10" is displaying on the CRT at a predetermined position. The one row display end pulse RE is generated in response to the seventeenth horizontal synchronizing pulse Hs. This pulse RE increments the content of the stack pointer 10 to designate the second register SR₂ of the stack register 8. Therefore, the address data of "5003(H)" is supplied to the VRAM pointer 9. The pulse RE is further supplied to the clock terminal φ̅ of a D-F/F 14 and the reset terminal R̅ of the counter part 172 of the CROM pointer 17. Since the data terminal D of the D-F/F 14 is supplied with the high level signal AF, the output Q̅ thereof changes to the high level in response to the falling edge of the pulse RE. The counter 172 is reset by the falling edge of the pulse RE. The VRAM pointer 9 catches the address data "5003(H)" from the stack register 8 in response to the falling edge of the line pulse LP which is generated simultaneously with the pulse RE. The falling edge of the pulse RE appears later than that of the pulse LP. The "5003(H)" address location of the RAM 5 stores data of "FFFF(H)". The data detector 15 therefore holds the high level signal AF. As a result, an AND gate 13 generates a character display end signal CEND representative of the display end of all characters per one video picture. This signal CEND is supplied to the CPU 2 to reset the character display command signal CON. The signal CON is thereby held at the low level. As a result, the MPX 18 connects the output of the program counter 6 to the address input of the ROM 4 and the MPX 7 connects the bus 30 to the address input of the RAM 5.

As shown in Fig. 3, the CPU 2 executes a judge instruction (Step 12) to detect whether the vertical synchronization pulse Vs arrives in response to the character display end signal CEND. If the vertical synchronizing pulse Vs does not arrive, another judge instruction is executed to detect whether or not a key input is present (Step 13). The arrival of the vertical synchronizing pulse Vs indicates the starting of a next video picture, and therefore the program jumps to the Step 10 to execute the character display command signal (CON) output processing operation. The above-mentioned character display operation is thereby executed. When the key input is detected in the Step 11 or 13, the program jumps to the Step 2.

Thus, the microcomputer l executes both of the program operation and the character display operation which are in asynchronism with each other.

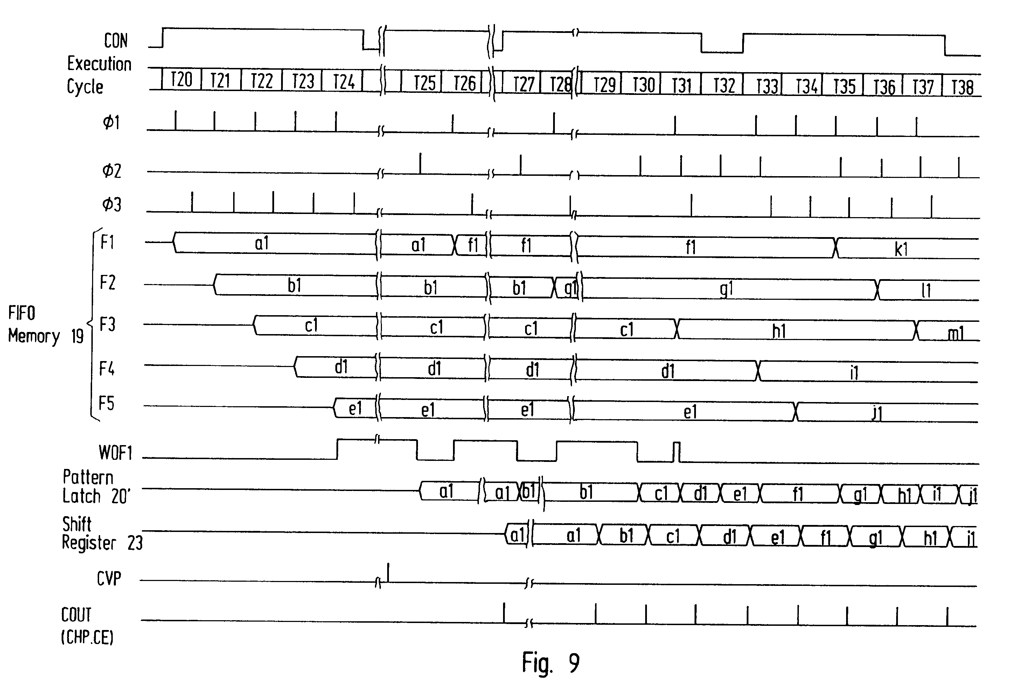

The microcomputer l according to the present invention presents remarkable advantages when characters more than four are displayed in one row. Assume that fourteen characters "a" to "n" are displayed in that order in one row. As shown in Fig. 9, during five execution cycles T₂₀ to T₂₄ responsive to the generation of the character display command signal CON, the first line character data a₁, b₁, c₁, d₁ and e₁ for the characters "a", "b", "c", "d" and "e" are written into the areas F1, F2, F3, F4 and F5 of the FlF0 memory 19, respectively. Since the FlF0 memory 19 produces the high level signal WOF, the latch clock φ₁ and the increment clock φ₃ are no longer generated. Accordingly, the output data of the VRAM pointer 9 is held to designate the address location of the RAM 5 in which the starting address designating the character data for "f" in the ROM 4 is stored. When the display clock generator 21 generates the pulse CVP as shown in Fig. 9, the latch clock φ₂ is generated in an execution cycle T₂₅, so that the pattern latch 20 latches the data a₁ of the area F1 of the FlF0 memory 19. Since the FlF0 memory 19 changes the signal WOF to the low level, the latch clock φ₁ is generated in an execution cycle T₂₆, so that the first lane data f₁ for the character "f" is written into the first area F1 of the FlF0 memory 19. Since the FlF0 memory 19 produces again the high level signal WOF, the output data of the VRAM pointer 9 is held at a next address data of the VRAM area 501. Since the clock generator 21 thereafter generates the pulse CHP, as shown in Fig. 9, the shift register 23 receives the data a₁ of the pattern latch 20. The latch clock φ₂ is generated in an execution cycle T₂₇, so that the pattern latch 20 stores the data b₁ of the second area F2 of the FlF0 memory 19. By the generation of the latch clock φ₁ in an execution cycle T₂₈, the first line data g₁ of the character "g" is written into the second area F2 of the FlF0 memory 19. The display clock generator 21 starts to generate the shift clock pulses SCL in an execution cycle T₂₉, for example, as shown in Fig. 9. The data a₁ of the shift register 23 is outputted one bit by one bit in response to each shift clock pulse SCL. The character end pulse CE is thereafter generated, so that the data b₁ of the pattern latch 20 is stored into the shift register 23 and then outputted one bit by one bit. Since the latch clock φ₂ is generated in an execution cycle T₃₀, the data c₁ of the area F3 is latched into the pattern latch 20. The latch clock φ₁ is generated in an execution cycle T₃₁, so that the first line data h₁ of the character "h" is written into the third area F3 of the FlF0 memory 10. By the pulse CE representative of the output end of the data b₁, the data c₁ of the pattern latch 20 is transferred into the shift register 23 and then outputted. The above operations are epeated as shown in Fig. 9. When the character display command signal CON changes to the low level during one execution cycle, as shown by the cycles T₃₂ and T₃₈ in Fig. 9, the CROM pointer 17 is inhibited to make access to the character area 402 of the ROM 4. However, a plurality of character data are prefetched into the FlF0 memory, and therefore the character data are outputted successively. When the data "FFFF(H)" representative of the end of one row character display is read from the RAM 5, the VRAM pointer 9 and CROM pointer 17 stop to operate. After the first line data n₁ of the character "n" is outputted, the AND gate 40 is closed. When the horizontal synchronizing pulse Hs thereafter arrives, the second line data a₁ to e₁ of the characters "a" to "e" are prefetched into the FlF0 memory 19, and the above operations are then repeated. In this embodiment, a time of one instruction execution cycle is 2 µsec, whereas the character end pulse CE is generated ever 2.5 µsec. The signal CON has a cycle period of 12 µsec and is held at the high level during a period of 10 µsec. Accordingly, even in the case where a plurality of characters are displayed successively, at least one character data remains in the FlF0 memory 19. Thus, the character display is not broken.

## Claims

1. A microcomputer for transferring character data to a display apparatus (50) which displays characters in response to said character data transferred thereto, comprising a read only memory (4) having a first area (401) for storing a plurality of instructions for a program, first accessing means (6) for accessing said first area of said read only memory to read out each instruction therefrom, a central processing unit (2) receiving and executing the instruction read out of said first area of said read only memory, and character data output means (20,23-27,40-43) for temporarily storing said character data supplied thereto and transferring said character data to said display apparatus in synchronism with signals (O2,SCL,COUT) relative to synchronizing signals (Hs,Vs) for said display apparatus, characterized in that said first area (401) of said read only memory (4) further stores an instruction representative of a character display command, that said central processing unit (2) receives and executes said instruction representative of said character display command to produce a character display command signal (CON), that said read only memory (4) further has a second area (402) for storing said character data, and that said microcomputer further comprises second accessing means (17) for accessing said second area (402) of said read only memory (4), control means (18) responsive to said character display command signal (CON) for cyclically inhibiting said first accessing means (6) from accessing said first area (401) of said read only memory (4) to bring said central processing unit (2) into a condition of suspending program execution and for allowing said second accessing means (17) to access said second area (402) of said read only memory (4) to read out said character data therefrom, and a first-in-first-out memory (19) for temporarily storing said character data read out of said second area (402) of said read only memory (4) and for supplying said character data to said character data output means (20,23-27,40-43).

2. The microcomputer as claimed in claim 1, characterized in that said central processing unit (2) produces said character display command signal (CON) cyclically so that said control means (18) allows said first accessing means (6) to access said first area (401) of said read only memory (4) cyclically, said central processing unit (2) thereby resuming the suspended program execution while said character data output means (20,23-27,40-43) is transferring said character data to said display apparatus (50).

3. The microcomputer as claimed in claim 2, characterized in that the time period of the absence of said character display command signal (CON) is shorter than that of the presence thereof.

4. The microcomputer as claimed in claim 1, 2 or 3, characterized in that said storage means comprises a first-in first-out memory (19) having a plurality of storage areas (F1-F5).

5. The microcomputer as claimed in claim 1, 2, 3 or 4, characterized in that said character data output means includes a pattern latch (20) for temporarily storing said character data supplied from said FIFO memory (19) and a shift register (23) for fetching said character data from said pattern latch (20) and shifting said character data one bit by one bit.

6. The microcomputer as claimed in claim 1, 2, 3, 4 or 5, characterized in that said microcomputer further comprises a data memory (5) having a data area for storing data to be processed by said central processing unit (2) and a VRAM area (501) for temporarily storing address information for said second area (401) of said read only memory (4), third accessing means (9) for accessing said VRAM area (501) of said data memory (5), additional control means (7) responsive to said character display command signal (CON) for inhibiting said data memory (5) from being accessed by said central processing unit (2) and for allowing said third accessing means (9) to access said VRAM area (501) of said data memory (5) to read out said address information therefrom and supply said address information to said second accessing means (17).

## Patentansprüche

1. Mikrocomputer zum Übertragen von Zeichendaten auf ein Anzeigegerät (50), das Zeichen in Abhängigkeit von den ihm übertragenen Zeichendaten darstellt, mit einem Festspeicher (4) mit einem ersten Bereich (401) zum Speichern einer Vielzahl von Instruktionen für ein Programm, einer ersten Zugriffseinrichtung (6) für einen Zugriff auf den ersten Bereich des Festspeichers, um aus diesem jede Instruktion herauszulesen, einer zentralen Prozessoreinheit (2), die die aus dem ersten Bereich des Festspeichers herausgelesene Information empfängt und verarbeitet, und mit einer Zeichendaten-Ausgangseinrichtung (20, 23 - 27, 40 - 43) zum zeitweiligen Speichern der zugeführten Zeichendaten und Übertragen der Zeichendaten auf das Anzeigegerät synchron zu den Signalen (02, SCL, COUT) relativ zu den synchronisierenden Signalen (Hs, Vs) für das Anzeigegerät,
dadurch **gekennzeichnet**, daß der erste Bereich (401) des Festspeichers (4) weiterhin eine Instruktion speichert, die für einen Zeichen-Anzeigebefehl repräsentativ ist, daß die zentrale Prozessoreinheit (2) die für den Zeichenanzeigebefehl repräsentative Instruktion empfängt und verarbeitet, um ein Zeichen-Anzeigebefehlssignal (CON) zu erzeugen, daß der Festspeicher (4) weiterhin einen zweiten Bereich (402) zum Speichern der Zeichendaten hat, und daß der Mikrocomputer weiterhin eine zweite Zugriffseinrichtung (17) hat für den Zugriff zum zweiten Bereich (402) des Festspeichers (4), eine Steuerungseinrichtung (18), die auf das Zeichen-Anzeige-Befehlssignal (CON) anspricht, um den Zugriff zum ersten Bereich (401) des Festspeichers durch die erste Zugriffseinrichtung (6) zyklisch zu blockieren, um die zentrale Prozessoreinheit (2) in einen Zustand der Programmsperrens zu bringen, und um zu erlauben, daß die zweite Zugriffseinrichtung (17) den Zugriff zum zweiten Bereich (402) des Festspeichers (4) durchführt, um aus diesem die Zeichendaten zu lesen, und einen first-in-first-out-Speicher (19) zum zeitweiligen Speichern der Zeichendaten, die aus dem zweiten Bereich (402) des Festspeichers (4) gelesen sind, und zum Zuführen dieser Zeichendaten zur Zeichendaten-Ausgangseinrichtung (20, 23 - 27, 40 - 43).

2. Mikrocomputer nach Anspruch 1,
dadurch **gekennzeichnet**, daß die zentrale Prozessoreinheit (2) das Zeichenanzeige-Befehlssignal (CON) zyklisch erzeugt, so daß die Steuereinrichtung (18) einen zyklischen Zugriff der ersten Zugriffseinrichtung (6) zum ersten Bereich (401) des Festspeichers (4) erlaubt, die zentrale Prozessoreinheit (2) dabei die Durchführung des Grundprogramms wiederaufnimmt, während die Zeichendaten-Ausgangseinrichtung (20, 23 - 27; 40 - 43) die Zeichendaten auf das Anzeigegerät (50) überträgt.

3. Mikrocomputer nach Anspruch 2,
dadurch **gekennzeichnet**, daß die Zeitspanne der Abwesenheit des Zeichen-Anzeigebefehlssignals (CON) kürzer als die der Anwesenheit desselben ist.

4. Mikrocomputer nach Anspruch 1, 2 oder 3,
dadurch **gekennzeichnet**, daß die Speichereinrichtung einen First-in-first-out-Speicher (19) mit einer Vielzahl von Speicherbereichen (F1 - F5) hat.

5. Mikrocomputer nach Anspruch 1, 2, 3 oder 4,
dadurch **gekennzeichnet**, daß die Zeichendaten - Ausgabeeinrichtung einen Muster-Zwischenspeicher (20) zum zeitweiligen Speichern der Zeichendaten, welche vom FIFO-Speicher (19) zugeführt worden sind, und ein Schieberegister (23) zum Abrufen der Zeichendaten aus dem Muster-Zwischenspeicher (20) und Verschieben der Zeichendaten um je ein Bit aufweist.

6. Mikrocomputer nach Anspruch 1, 2, 3, 4 oder 5,
dadurch **gekennzeichnet**, daß der Mikrocomputer weiterhin aufweist einen Datenspeicher (5) mit einem Datenbereich zum Speichern der von der zentralen Prozessoreinheit (2) zu bearbeitenden Daten und einen VRAM-Bereich (501) zum zeitweiligen Speichern der Adresseninformation für den zweiten Bereich (401) des Festspeichers (4), eine dritte Zugriffseinrichtung (9) für den Zugriff zum VRAM-Bereich (501) des Datenspeichers (5), eine zusätzliche Steuereinrichtung (7), die auf das Zeichenanzeige-Befehlssignal (CON) anspricht, um den Zugriff zum Datenspeicher (5) durch die zentrale Prozessoreinheit (2) zu unterbinden, und um den Zugriff zum VRAM-Bereich (501) des Datenspeichers (5) durch die dritte Zugriffseinrichtung (9) zu erlauben, um aus diesen die Adresseninformation zu lesen und diese Adresseninformation der zweiten Zugriffseinrichtung (17) zuzuführen.

## Revendications

1. Micro-ordinateur pour le transfert de données de caractères à un dispositif d'affichage (50) qui affiche des caractères en réponse auxdites données de caractères qui y sont transférées, comprenant :
- une mémoire morte (4) ayant une première zone (401) pour mémoriser une pluralité d'instructions pour un programme;
- des premiers moyens d'accès (6) pour accéder à ladite première zone de ladite mémoire morte, pour y lire chaque instruction;
- une unité centrale de traitement (2) recevant et exécutant l'instruction lue dans ladite première zone de ladite mémoire morte; et
- des moyens de sortie de données de caractères (20,23-27,40-43) pour mémoriser de façon temporaire lesdites données de caractères qui y sont fournies et pour transférer lesdites données de caractères audit dispositif d'affichage en synchronisme avec des signaux (O2,SCL,COUT) relatifs à des signaux de synchronisation (Hs,Vs) pour ledit dispositif d'affichage,
caractérisé en ce que ladite première zone (401) de ladite mémoire morte (4) mémorise en outre une instruction représentative d'une commande d'affichage de caractère, en ce que ladite unité centrale de traitement (2) reçoit et exécute ladite instruction représentative de ladite commande d'affichage de caractère pour produire un signal de commande d'affichage de caractère (CON), en ce que ladite mémoire morte (4) a en outre une deuxième zone (402) pour mémoriser lesdites données de caractères, et en ce que ledit micro-ordinateur comprend en outre :
- des deuxièmes moyens d'accès (17) pour accéder à ladite deuxième zone (402) de ladite mémoire morte (4);
- des moyens de commande (18) sensibles audit signal de commande d'affichage de caractère (CON) pour interdire de façon cyclique auxdits premiers moyens d'accès (6) d'accéder à ladite première zone (401) de ladite mémoire morte (4), pour introduire une condition de suspension d'exécution de programme dans ladite unité centrale de traitement (2), et pour autoriser lesdits deuxièmes moyens d'accès (17) à accéder à ladite deuxième zone (402) de ladite mémoire morte (4) pour y lire lesdites données de caractères; et
- une mémoire premier entré premier sorti (19) pour mémoriser de façon temporaire lesdites données de caractères lues dans ladite deuxième zone (402) de ladite mémoire morte (4) et pour fournir lesdites données de caractères auxdits moyens de sortie de données de caractères (20,23-27, 40-43).

2. Micro-ordinateur selon la revendication 1, caractérisé en ce que ladite unité centrale de traitement (2) produit ledit signal de commande d'affichage de caractère (CON) de façon cyclique de telle sorte que lesdits moyens de commande (18) autorisent lesdits premiers moyens d'accès (6) à accéder à ladite première zone (401) de ladite mémoire morte (4) de façon cyclique, ladite unité centrale de traitement (2) reprenant ainsi l'exécution du programme en suspension tandis que lesdits moyens de sortie de données de caractères (20,23-27,40-43) transfèrent lesdites données de caractères audit dispositif d'affichage (50).

3. Micro-ordinateur selon la revendication 2, caractérisé en ce que la durée de l'absence dudit signal de commande d'affichage de caractère (CON) est plus courte que celle de sa présence.

4. Micro-ordinateur selon la revendication 1, 2 ou 3, caractérisé en ce que lesdits moyens de mémoire comprennent une mémoire premier-entré premier-sorti (19) ayant une pluralité de zones de mémoire (F1-F5).

5. Micro-ordinateur selon la revendication 1, 2, 3 ou 4, caractérisé en ce que lesdits moyens de sortie de données de caractères comportent un circuit de verrouillage de profil (20), pour la mémorisation temporaire desdites données de caractères fournies depuis ladite mémoire FIFO (19), et un registre à décalage (23), pour extraire lesdites données de caractères dudit circuit de verrouillage de profil (20) et décaler un par un les bits desdites données de caractères.

6. Micro-ordinateur selon la revendication 1, 2, 3, 4 ou 5, caractérisé en ce que ledit micro-ordinateur comprend en outre :
- une mémoire de données (5) ayant une zone de données, pour mémoriser des données à traiter par ladite unité centrale de traitement (2), et une zone VRAM (501), pour mémoriser de façon temporaire des informations d'adresse pour ladite deuxième zone (401) de ladite mémoire morte (4);
- des troisièmes moyens d'accès (9) pour accéder à ladite zone VRAM (501) de ladite MO de données (5); et
- des moyens de commande (7) supplémentaires, sensibles audit signal de commande d'affichage de caractère (CON), pour interdire à ladite unité centrale de traitement (2) d'accéder à ladite mémoire de données (5) et pour permettre auxdits troisièmes moyens d'accès (9) d'accéder à ladite zone VRAM (501) de ladite mémoire de données (5) pour y lire lesdites informations d'adresse et fournir lesdites informations d'adresse auxdits deuxièmes moyens d'accès (17).
